# EUROPÄISCHE PATENTSCHRIFT

(11) **EP 2 384 839 B1**
(45) Veröffentlichungstag und Bekanntmachung des Hinweises auf die Patenterteilung: **02.01.2013**
(21) Anmeldenummer: 10161837.9
(22) Anmeldetag: 04.05.2010
(51) Int. Cl.: B23B 31/28

(54) **Spanneinrichtung**
Clamping device
Dispositif de tension

(43) Veröffentlichungstag der Anmeldung: 09.11.2011
(73) Patentinhaber: Hiestand, Karl, 88630 Pfullendorf (DE)
(72) Erfinder: Hiestand, Karl, 88630 Pfullendorf (DE)
(74) Vertreter: Engelhardt, Guido

(56) Entgegenhaltungen:
- EP-A1- 2 103 368
- DE-C1- 3 727 445
- US-A- 4 567 794

## Beschreibung

Die Erfindung bezieht sich auf eine Spanneinrichtung gemäß dem Oberbegriff vom Anspruch 1, sowie ein Verfahren gemäß dem Oberbegriff vom Anspruch 21. Eine solche Spanneinrichtung und ein solches Verfahren sind aus DE 3 727 445 C1 bekannt.

Eine Spanneinrichtung, insbesondere für Werkzeugmaschinen, die beispielsweise mit einem Kraftspannfutter zur Halterung eines Werkstückes versehen und dessen Spannbacken mittels der Spanneinrichtung über eine axial verstellbare Zugstange betätigbar sind, wobei die Spanneinrichtung einen umschaltbaren elektrischen Servomotor zum Auslösen von Spannbewegungen, einen Bewegungswandler zur Umsetzung der Verstellbewegungen der Rotorwelle des Servomotors in die zur Betätigung der Spannbacken erforderlichen axialen Verstellbewegungen der Zugstange und einen Kraftspeicher zur Aufrechterhaltung der Spannkraft aufweist, sowie ein Verfahren zur Steuerung des Servomotors in Abhängigkeit von der Drehzahl des Antriebsmotors der Werkzeugmaschine werden eingereicht.

Durch die EP 0 228 007 A2 ist eine Spanneinrichtung dieser Art bekannt. Der Rotor des Servomotors wird hierbei, sobald diesem elektrische Energie zugeführt wird, durch das sich zwischen dem Stator und dem Rotor aufbauende elektromagnetische Feld entgegen der Kraft einer Feder axial in die Mittellage verschoben und über eine Verzahnung mit einem Bauteil trieblich verbunden, das über den durch ineinander greifende Gewinde gebildeten Bewegungswandler mit der Zugstange gekoppelt ist. Außerdem wird durch dieses Bauteil der aus mehreren Tellerfederpaketen bestehende Kraftspeicher, sobald die Zugstange nicht mehr bewegt wird, aktiviert,

Obwohl der Bauaufwand somit erheblich ist, ist das Kraftspannfutter während eines Bearbeitungsvorganges nicht gesichert. Da die an der Kraftübertragung beteiligten Bauteile gegen eine Rückdrehung in sich nicht abgestützt sind, kann sich somit das Kraftspannfutter selbsttätig öffnen. Die bekannte Spanneinrichtung ist daher in der Praxis nicht einsetzbar.

Aufgabe der Erfindung ist es demnach, eine Spanneinrichtung der eingangs genannten Gattung in der Weise auszubilden, dass der Servomotor nur zum Spannen und zum Entspannen eines Werkstückes in Betrieb genommen werden muss und somit nur in diesen Betriebszuständen mit der Spanneinrichtung in Triebverbindung steht. Vor allem aber sollen während der Bearbeitung eines Werkstückes alle an der Kraftübertragung beteiligten Bauteile der Spanneinrichtung mit der Maschinenspindel trieblich fest verbunden sein, so dass Rückstellbewegungen des Kraftspannfutters auszuschließen sind. Außerdem soll mit Hilfe des Kraftspeichers eine definierte Nachspannung ermöglicht werden. Eine stets sichere Betriebsweise der Spanneinrichtung soll demnach stets gewährleistet sein.

Diese Aufgabe wird durch eine Spanneinrichtung gemäß Anspruch 1, sowie durch ein Verfahren gemäß Anspruch 21 gelöst.

Gemäß der Erfindung wird dies mit einer Spanneinrichtung der vorgenannten Art dadurch erreicht, dass der Servomotor zum Auslösen von Spannbewegungen mittels einer gesteuert verstellbaren Schiebemuffe unmittelbar oder über Zwischenglieder mit dem Bewegungswandler verbindbar ist, dass der Bewegungswandler und der Kraftspeicher in einem mit der Maschinenspindel der Werkzeugmaschine koppelbaren Gehäuse eingesetzt sind und dass in Spannstellung der Spanneinrichtung die Schiebemuffe von dem Servomotor entkoppelbar und das Gehäuse über diese mit dem Bewegungswandler fest verbindbar ist.

Zweckmäßig ist es hier, das Gehäuse der Spanneinrichtung im Querschnitt Z-förmig auszubilden, das aus einer der Maschinenspindel zugekehrten Hülse zur Aufnahme des Bewegungswandlers und des Kraftspeichers und einer dem Servomotor zugewandten Hohlwelle zur Halterung der Schiebemuffe bestehen sollte, wobei die Hülse und die Hohlwelle des Gehäuses über eine Zwischenwand fest miteinander verbunden sein sollten.

Des Weiteren sollten in der Zwischenwand des Gehäuses ein oder mehrere Zwischenglieder zur formschlüssigen Triebverbindung der Schiebemuffe mit dem Bewegungswandler drehbar gelagert sein, die jeweils als eine mit unterschiedlich ausgelegten Zahnrädern versehene Welle bestehen können, die einerseits unmittelbar oder über Zwischenräder mit der Schiebemuffe und andererseits mit dem Bewegungswandler verbunden und als Untersetzungsgetriebe ausgelegt sind.

Nach einer andersartigen Ausgestaltung kann das Gehäuse auch topfförmig ausgebildet werden, indem an einem mit der Maschinenspindel verbindbaren tellerförmigen Ring, mit radialem Abstand zur Zugstange, eine axial abstehende Hülse angeformt wird, in die der Bewegungswandler und der Kraftspeicher einzusetzen sind.

Die Schiebemuffe sollte ferner über zwei jeweils auf deren seitlichen Stirnflächen angeordnete Zahnkränze mit einem mit dem Servomotor verbundenen Antriebsrad und dem Gehäuse bzw. dessen Zwischenwand über an diesen angebrachte Zahnkränze wechselweise formschlüssig koppelbar sein. Die Verzahnungen der in dem Antriebsrad, dem Gehäuse und der Schiebemuffe angebrachten Zahnkränze sollten derart angeordnet und voneinander beabstandet sein, dass sich bei einer Verstellbewegung der Schiebemuffe die ineinander greifenden Verzahnungen bis zur Einnahme der jeweiligen Endstellung der Schiebemuffe überdecken. Ferner sollte die Schiebemuffe entgegen der Kraft einer oder mehrer Druckfedern an einem an der Hohlwelle des Gehäuses angebrachten Flansch abgestützt sein.

Zweckmäßig ist es auch, die Schiebemuffe mittels einer Servoeinrichtung, zum Beispiel in Form eines in einen Zylinder eingesetzte und durch ein Druckmittel verstellbaren Verstellkolben oder eines Elektromagneten, axial zu verrücken.

Der mit dem Antriebsrad unmittelbar oder über Zwischenglieder koppelbarer Servomotor kann fluchtend, achsparallel oder achssenkrecht zur Längsachse des Gehäuses der Spanneinrichtung angeordnet werden.

Der Bewegungswandler kann in einfacher Ausgestaltung durch einen zwischen einer mit dem Servomotor verbindbaren Hohlwelle und der Zugstange angeordnete Planetenrollen gebildet werden, wobei auf der Hohlwelle des Bewegungswandlers der Kraftspeicher angeordnet und durch diese aktiviert werden kann.

Der Kraftspeicher sollte aus einem zwischen zwei mit konstantem Abstand und gegeneinander verspannten Wälzlagern eingesetztes Federpaket und zwei seitlich neben diesem vorgesehenen die Wälzlager übergreifenden Hülsen bestehen, an deren einander zugewandten Stirnflächen das Federpaket anliegt. Zur Aktivierung des Kraftspeichers ist es angezeigt, den Hülsen an dem Gehäuse vorgesehene Anschläge zuzuordnen, mit denen die Hülsen mit ihren äußeren Stirnflächen wechselweise zusammenwirken.

Das Federpaket sollte hierbei aus mehreren auf zwischen den beiden Wälzlagern eingesetzte vzw. an den Außenringen abgestützten und gleichmäßig über den Umfang verteilt angeordnete Distanzbolzen aufgereihte oder neben diesen angeordnete Schraubendruckfedern mit vorzugsweise rechteckigem Querschnitt oder aus Tellerfedern gebildet sein.

Durch Verspannung des Kraftspeichers bei abgestützter Zugstange kann somit die Hohlwelle des Bewegungswandlers jeweils entgegen der Verstellrichtung der Zugstange um einen vorzugsweise in beiden Verstellrichtungen wählbaren Verstellweg verstellt werden.

Nach einer Weiterbildung ist vorgesehen, die Spanneinrichtung mit einer Wegmesseinrichtung zu versehen, die aus einem unmittelbar an der Zugstange oder über Zwischenglieder an dieser angebrachten Stellungsanzeiger, zum Beispiel in Form eines Abfrageringes, und einem ortsfest angeordneten Sensor bestehen kann, dessen Signale einer Anzeigeeinheit zuleitbar sind, wobei der Stellungsanzeiger der Wegmesseinrichtung das Gehäuse der Spanneinrichtung durchgreifen und der Sensor in Höhe des Stellungsanzeigers an der Werkzeugmaschine abgestützt sein sollte.

Angebracht ist es ferner, den Antriebsmotor der Werkzeugmaschine über ein Steuergerät mit dem Servomotor elektrisch zu verbinden. Dadurch ist es möglich, den Servomotor der Spanneinrichtung in Abhängigkeit von der Drehzahl des Antriebsmotors der Werkzeugmaschine derart zu steuern, dass zur Erhöhung oder Reduzierung der Spannkraft des Kraftspannfutters während eines Bearbeitungsvorganges die Drehzahl des Servomotors mit Hilfe des Steuergerätes derart einstellbar ist, dass zur Koppelung des Antriebsrades mit der Schiebemuffe der Servomotor synchron mit der Drehzahl des Antriebsmotors umläuft und dass zur Erhöhung oder Reduzierung der Spannkraft der Servomotor gegenüber der Synchrondrehzahl mit erhöhter bzw. verminderter Drehzahl angetrieben werden kann.

Wird eine Spanneinrichtung gemäß der Erfindung ausgebildet, ist es ausgeschlossen, dass die Spannkraft des Kraftspannfutters während eines Arbeitsvorganges unkontrolliert verändert und dass dieses mitunter selbsttätig geöffnet wird. Dadurch, dass der Servomotor nur zum Einspannen und zum Lösen eines Werkstückes mit den an der Kraftübertragung beteiligten Bauteilen trieblich verbunden ist, können durch diese nur in diesen Betriebszuständen Verstellbewegungen ausgelöst werden. Bei einem Arbeitsvorgang sind dagegen die an der Kraftübertragung beteiligten Bauteile über die Schiebemuffe mit der Maschinenspindel gekoppelt und demnach blockiert. Eine Lageänderung der Zugstange und damit eine Entspannung im Kraftspannfutter ist somit nicht möglich.

Der Kraftspeicher gewährleistet aber, dass die Spannkraft, auch bei einer durch die Bearbeitung des Werkstückes bedingten Reduzierung, aufrechterhalten bleibt. Mit Hilfe des Bewegungswandlers kann nämlich der Kraftspeicher definiert vorgespannt werden. Für Nachspannungen steht demnach die in diesem gespeicherte Energie zur Verfügung.

Mit geringem Bauaufwand ist somit eine Spanneinrichtung geschaffen, die nicht nur relativ einfach in ihrem konstruktiven Aufbau ist und dadurch auch wirtschaftlich hergestellt werden kann, sondern, die vor allem einen stets sicheren Einsatz bei geringem Energieaufwand, da im Betrieb der Servomotor außer Betrieb genommen werden kann, gewährleistet und vielseitig verwendbar ist.

In der Zeichnung ist ein Ausführungsbeispiel einer gemäß der Erfindung ausgebildeten Spanneinrichtung dargestellt und nachfolgend im Einzelnen erläutert. Hierbei zeigt
- Figur 1: die Spanneinrichtung in einem Axialschnitt während eines Arbeitsvorganges,
- Figur 2: die Spanneinrichtung nach Figur 1 in einem Halbschnitt und vergrößerter Darstellung, mit angekoppeltem Servomotor,
- Figur 3: die Spanneinrichtung nach Figur 1 in einem Halbschnitt und vergrößerter Wiedergabe,
- Figur 4: einen Ausschnitt aus Figur 3 in vergrößerter Wiedergabe und
- Figur 5: eine Ausführungsvariante der Spanneinrichtung nach Figur 1, angebaut an der Maschinenspindel einer Werkzeugmaschine, in einer Darstellung nach Figur 3.

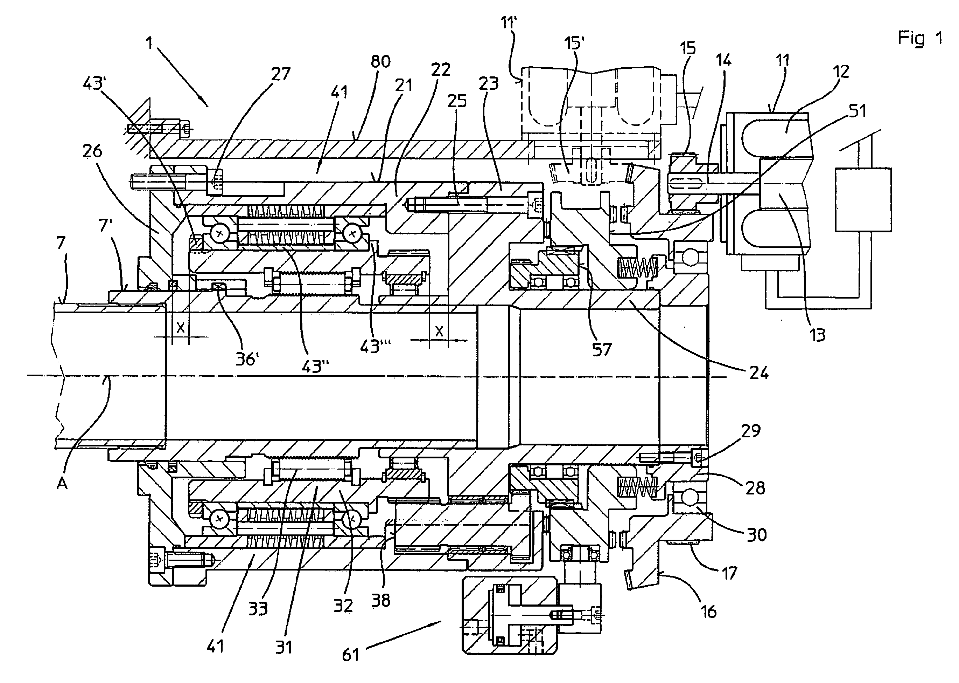

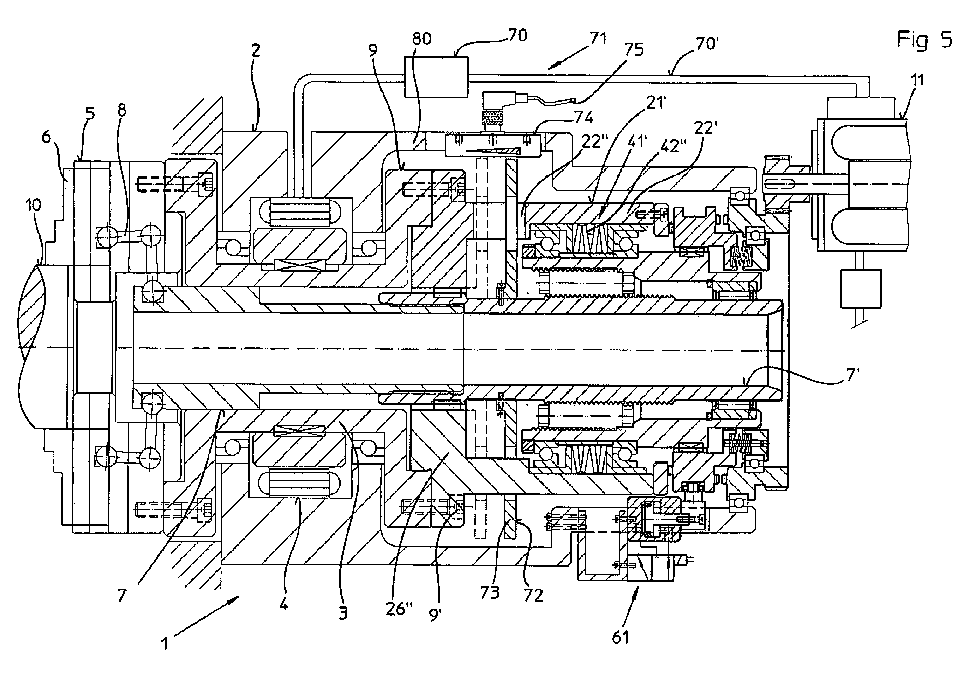

Die in den Figuren 1 und 5 dargestellt und mit 1 bzw. 1' bezeichnete Spanneinrichtung dient zur Betätigung eines auf einer Werkzeugmaschine 2 angeordneten Kraftspannfutters 5, mittels dessen radial verstellbarer Spannbacken 6 ein zu bearbeitendes Werkstück 10 in dem Kraftspannfutter 5 einzuspannen ist. Die Spannbacken des Kraftspannfutters 5 sind hierbei über Umlenkhebel 8 durch eine axial verstellbare, zweiteilige Zugstange 7, 7' betätigbar, die mit einem umschaltbaren elektrischen Servomotor 11 über ein Bewegungswandler 31 bzw. 31' in Triebverbindung steht. Mittels des Bewegungswandlers 31 bzw. 31' werden rotatorische Verstellbewegungen des Servomotors 11 in axiale Zustellbewegungen der Zugstange 7, 7' umgewandelt.

Der Servomotor 11 besteht aus einem achsparallel zur Längsachse A der Spanneinrichtung 1 ortsfest angeordneten Stator 12 und einem Rotor 13, mit dessen Rotorwelle 14 ein Ritzel 15 drehfest verbunden ist, das in eine an einem Antriebsrad 16 angebrachte Verzahnung 17 eingreift. Der Servomotor 11' kann aber auch, wie dies in Figur 1 strichiert eingezeichnet ist, achssenkrecht zur Längsachse A angeordnet werden und mittels eines Ritzels 15' in das mit einer diesem zugeordneten Verzahnung 19 versehene Antriebsrad 16 eingreifen.

Der Bewegungswandler 31 ist bei der Ausgestaltung der Spanneinrichtung 1 nach Figur 1 in einem Z-förmig gestalteten Gehäuse 21 eingesetzt, das, wie dies der Figur 5 zu entnehmen ist, mittels Schrauben 9' an einem Flansch 9 der durch einen Elektromotor 4 angetriebenen Maschinenspindel 3 befestigt ist. Das Gehäuse 21 weist hierbei eine Hülse 22, eine mit dieser mittels Schrauben 25 verbundene Zwischenwand 23 sowie eine an dieser angeformte Hohlwelle 24 auf. Durch einen Deckel 26 ist die Hülse 22 auf der der Maschinenspindel 3 zugekehrten Seite verschlossen. Auf der gegenüberliegenden Seite ist dagegen ein Flansch 28 mittels Schrauben 29 an der Hohlwelle 24 angebracht, auf dem das Antriebsrat 16 mit Hilfe eines Lagers 30 drehbar gelagert ist. Der Deckel 26 ist über Schrauben 26' fest mit der Hülse 22 verbunden. Mittels Schrauben 27, die den Deckel 26 durchgreifen, ist die Hülse 22 und somit das Gehäuse 21 an der Maschinenspindel 3 befestigt.

Bei der Ausgestaltung nach Figur 5 ist dagegen das Gehäuse 21' im Querschnitt topfförmig gestaltet. An einem tellerförmigen Ring 26" ist hierbei mit radialem Abstand zur Zugstange 7' eine axial abstehende Hülse 22' angeformt, in die der Bewegungswandler 31' und der Kraftspeicher 41' eingesetzt sind.

Der Bewegungswandler 31 bzw. 31' besteht aus einer mit dem Servomotor 11 trieblich verbindbaren Hohlwelle 32 und Planetenrollen 33, die zwischen der Hohlwelle 32 und der Zugstange 7 eingesetzt sind und über ein Gewinde 34 in ein an der Zugstange 7 eingearbeitetes Außengewinde 35 eingreifen. Über ein Lager 36 und einem Ansatz 36', der in den Deckel 26 abgestützt ist, ist die Hohlwelle 32 verdrehfest gehalten.

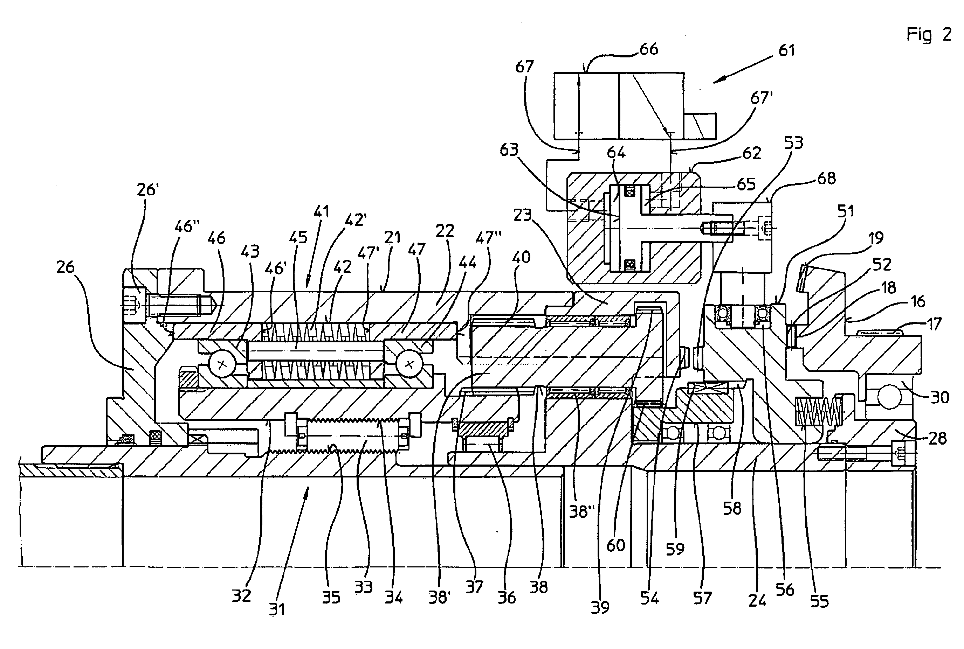

Die Triebverbindung zwischen dem dem Servomotor 11 zugeordneten Antriebsrat 16 und der Hohlwelle 32 des Bewegungswandlers 31 wird über die Schiebemuffe 51 bewerkstelligt. Bei dem in Figur 2 dargestellten Betriebszustand, in dem ein Spannvorgang ausgeführt wird, wird die Antriebsenergie von dem Antriebsrat 16 über einen an diesem angebrachten Zahnkranz 18 und einem an der Schiebemuffe 51 vorgesehenen Zahnkranz 52 auf diese übertragen. Über eine Innenverzahnung 58 wird durch die Schiebemuffe 51 ein Zwischenrad 57 angetrieben, das über eine Außenverzahnung 59 mit der Schiebemuffe 51 trieblich verbunden ist. Das Zwischenrad 57 ist mit einer weiteren Außenverzahnung 60 mit einem Zahnrad 39 in Triebverbindung, das an einer mittels eines Wälzlagers 38" in der Zwischenwand 23 drehbar gelagerten Welle 38' als Zwischenglied 38 angearbeitet ist. Über eine weitere an der Welle 38' angebrachte Verzahnung 40, die in ein an der Hohlwelle 22 vorgesehenes Zahnrad 37 eingreift, ist die triebliche Verbindung bewerkstelligt.

Bei der Ausgestaltung nach Figur 5 ist die Schiebemuffe 41 unmittelbar mit der Hohlwelle 32 des Bewegungswandlers 31 trieblich verbunden.

Der Kraftspeicher 41 bzw. 41' weist ein zwischen zwei mit konstantem Abstand zueinander angeordnete Wälzlager 43 und 44 eingesetztes Federpakte 42 sowie zwei winkelig gestaltete Hülsen 46 und 47 auf. Als Federpaket 42 sind eine Vielzahl von gleichmäßig über den Umfang verteilt angeordnete, zwischen den Hülsen 46 und 47 eingesetzte und auf Distanzbolzen 45 gehaltene Schraubendruckfedern 42' oder Tellerfedern 42" (Figur 5) vorgesehen, die sich an den einander zugewandten Stirnflächen 46' und 47' der Hülsen 46 und 47 abstützen. Die äußeren Stirnfläche 46" und 47" der Hülsen 46 und 47 wirken dagegen mit an dem Gehäuse 22 vorgesehenen Anschlägen 48 und 49 zusammen. Die Innenringe der Wälzlager 43 und 44 sind hierbei mittels einer auf die Hohlwelle 32 aufgeschraubten Mutter 43', einer zwischen den Wälzlagern 43 und 44 eingesetzten Hülse 43" sowie einem von der Hohlwelle 33 abstehenden Anschlag 43"' gegeneinander verspannt.

Zur Betätigung der Schiebemuffe 51 dient eine Servoeinrichtung 61, die aus einem in einen Zylinder 62 eingesetzten, von einem Druckmittel beidseitig beaufschlagbaren Kolben 63 besteht. Über ein Winkelstück 68, das in eine in die Schiebemuffe 51 eingearbeitete umlaufende Nut 56 eingreift, ist der Kolben 63 mit dieser trieblich verbunden.

Wird den Druckräumen 64 oder 65 der Servoeinrichtung 61 über ein Ventil 66 und Druckleitungen 67 oder 67' gesteuert Druckmittel zugeführt, so wird der Kolben 63 und mit diesem das Winkelstück 68 nach rechts oder links verschoben. Von dem Winkelstück 68 wird die Schiebemuffe 51 mitgenommen, so dass diese ebenfalls nach rechts oder links bewegt wird und die an deren Stirnflächen vorgesehenen Verzahnungen 52 oder 53 wechselweise in den an dem Antriebsrad 16 angebrachten Zahnkranz 18 oder den an dem Zwischenstück 23 oder der Hülse 22' angearbeiteten Zahnkranz 54 eingreifen. Die Zahnkränze 18, 52, 53 und 54 an dem Antriebsrad 16 der Schiebemuffe 51 und dem Gehäuse 21, sollten derart voneinander beabstandet sein, dass bei einer Verstellbewegung der Schiebemuffe 41 die ineinander greifenden Verzahnungen sich bis zur Endstellung der Schiebemuffe 41 überdecken. Damit die Triebverbindung zwischen der Schiebemuffe 51 und dem Gehäuse 21, bei eingerückten Verzahnungen der Zahnkränze 53 und 54, gesichert ist, ist die Schiebemuffe 51 mittels einer Druckfeder 55 an dem Flansch 28 abgestützt.

Um ein Werkstück 10 in dem Kraftspannfutter 5 einzuspannen, ist aus der in Figur 1 gezeigten Darstellung der Spanneinrichtung 1 die Schiebemuffe 51 durch Betätigen der Servoeinrichtung 61 nach rechts zu verschieben, so dass der an der Schiebemuffe 51 angebrachte Zahnkranz 52, wie dies in Figur 2 gezeigt ist, in den an dem Antriebsrad 16 vorgesehenen Zahnkranz 18 eingreift. Wird in diesem Betriebszustand der Servomotor 11 eingeschaltet, so wird das von diesem abgegebene Drehmoment über die Schiebemuffe 51, das Zwischenrad 57 sowie das Zwischenglied 38, auf die Hohlwelle 32 des Bewegungswandlers 31 übertragen. Mittels der Gewinderollspindel 33 wird die eingeleitete Rotationsbewegung in eine translatorische Bewegung umgewandelt und die Zugstange 7 wird, je nach eingeleiteter Drehrichtung, nach links oder rechts verschoben, so dass die Spannbacken 6 des Kraftspannfutters 5 gegen das Werkstück 10 von innen oder von außen gepresst werden.

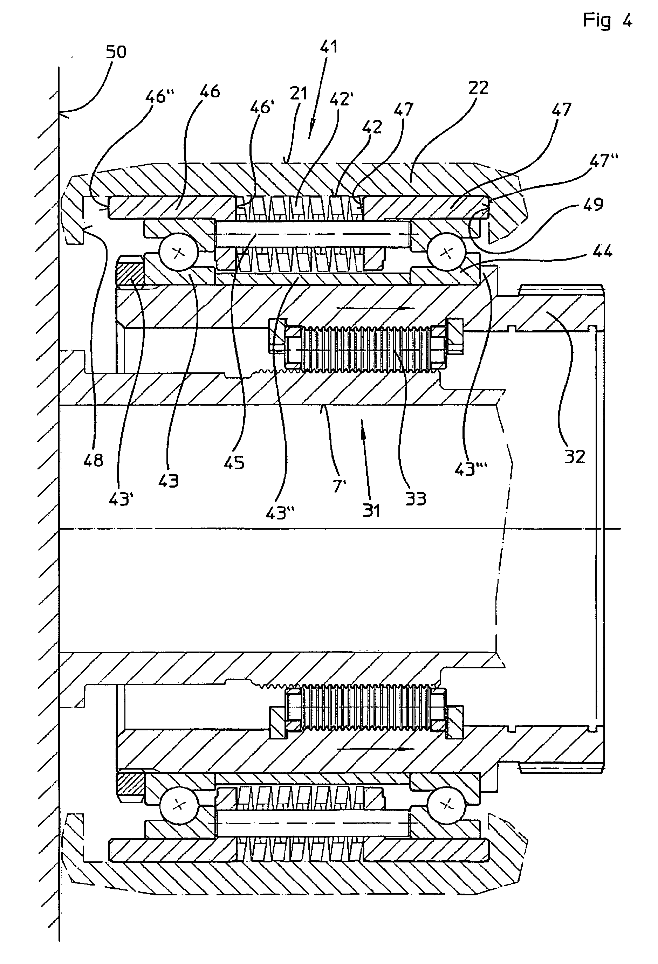

Sobald eine wählbare Spannkraft erreicht ist, wird der Kraftspeicher 41 aktiviert. Die an dem Werkstück 10 anliegenden Spannbacken 6 bilden in diesem Betriebszustand, wie dies in Figur 4 schematisch dargestellt ist, gewissermaßen einen Anschlag, so dass die Zugstange 7 stillgesetzt ist. Durch die Gewinderollspindel 33 wird in diesem Betriebszustand, sofern das von dem Servomotor 11 eingeleitete Drehmoment weiter ansteht, die Bewegungsrichtung umgekehrt, und die Hohlwelle 32 wird, unter der Annahme, dass die Zugstange 7 zunächst nach links verstellt wurde, nunmehr nach rechts bewegt, und zwar um einen wählbaren Verstellweg X bis zur Anlage der Stirnfläche 47" der Hülse 47 an dem Anschlag 49 des Gehäuses 21, wie dies der Figur 4 zu entnehmen ist. Der Kraftspeicher 41 kann, sobald durch arbeitsbedingte Änderungen an dem Werkstück 10 die Spannkraft reduziert wird, die in dem Federpaket 42 gespeicherte Energie abgeben, so dass ein Spannkraftverlust selbsttätig ausgeglichen wird.

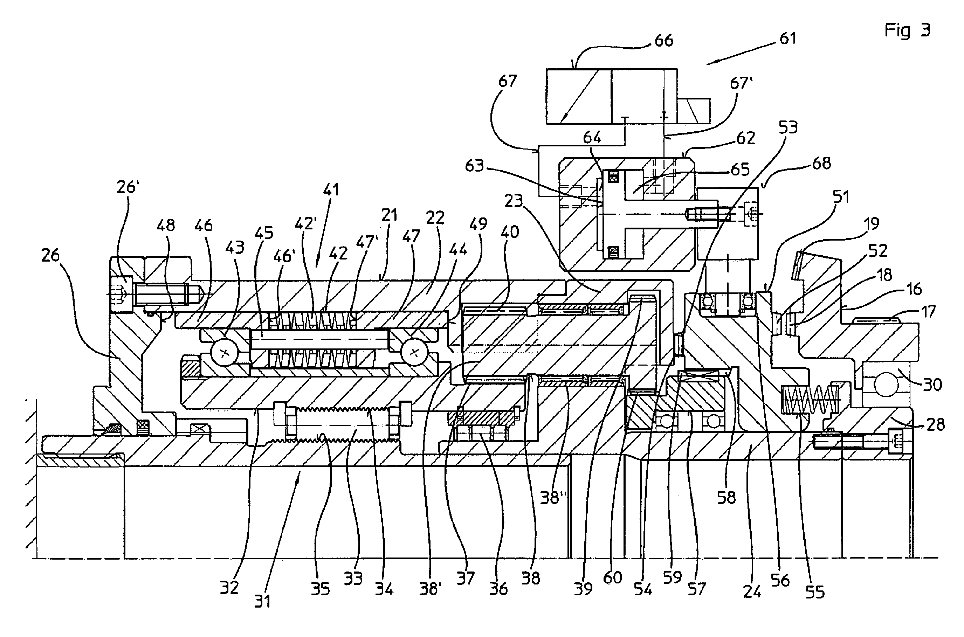

Nach dem Einspannen des Werkstückes 10 kann der Servomotor 11 von dem Bewegungswandler 31 getrennt werden. Dazu ist die Schiebemuffe 51 mit Hilfe der Servoeinrichtung 61 in die in Figur 3 dargestellte Position zu verschieben. Die Zähne des Zahnkranzes 53 greifen nunmehr in die Zähne des an dem Gehäuse 21 angebrachten Zahnkranzes 54 ein. Außerdem ist die Schiebemuffe 51 über das Zwischenrad 57 und das Zwischenglied 58 mit der Hohlwelle 32 des Bewegungswandlers 31 trieblich verbunden.

Und da das Gehäuse 21 mit der Maschinenspindel 3 der Werkzeugmaschine 2 fest verbunden ist, sind die an der Kraftübertragung beteiligten Bauteile der Spanneinrichtung 1 bzw. 1' - außer dem abgekoppelten Antriebsrad 16 - verblockt und laufen mit der Maschinenspindel 3 um. Ein selbsttätiges Öffnen des Kraftspannfutters 5 ist somit ausgeschlossen, so dass eine hohe Betriebssicherheit gewährleistet ist.

Um auszuschließen, dass bei einem Schaltvorgang der Bewegungswandler 31 weder durch den Servomotor 11 noch durch die Maschinenspindel 3 gesichert ist, sind die zusammenwirkenden Verzahnungen des Antriebsrades 16, des Gehäuses 21 und der Schiebemuffe 51 derart angeordnet, dass sich bei einer Verstellbewegung der Schiebemuffe 51 die ineinander greifenden Verzahnungen bis zur Einnahme der jeweiligen Endstellung der Schiebemuffe 51 überdecken. Somit ist stets eine Abstützung des Bewegungswandlers 31 gegeben.

Um auch mit Hilfe des Servomotors 11 während eines Bearbeitungsvorganges eine Erhöhung oder Reduzierung der Spannkraft des Kraftspannfutters 5 vornehmen zu können, ist, wie dies der Figur 5 zu entnehmen ist, der Antriebsmotor 4 der Werkzeugmaschine 2 über ein Steuergerät 70 und Verbindungsleitungen 70' mit dem Servomotor 11 elektrisch verbunden. In Abhängigkeit von der Drehzahl des Antriebsmotors 4 kann mittels des Steuergerätes 70 die Drehzahl des Servomotors 11 derart eingestellt werden, dass dieser vor der Verbindung des Antriebsrades 16 mit der Schiebemuffe 51 synchron mit der Drehzahl des Antriebsmotors 4 umläuft. Wird die Drehzahl des Servomotors 11 gegenüber der Drehzahl des Antriebsmotors 4 erhöht oder verringert, wird somit die Spannkraft des Kraftspannfutters 5 gesteigert oder reduziert.

Um den Betriebszustand des Kraftspannfutters 5 während Arbeitsvorgängen überwachen zu können, ist die Spanneinrichtung 1', wie dies in Figur 5 gezeigt ist, mit einer Wegmesseinrichtung 71 ausgestattet. Unmittelbar an der Zugstange 7' ist hierbei ein Stellungsanzeiger 72 in Form eines Abfrageringes 73 angebracht, der das mit einer entsprechenden Ausnehmung 22" versehene Gehäuse 21' durchgreift und mit einem auf einer ortsfesten Wand 80 angeordneten Sensor 74 zusammengehört. Die in Abhängigkeit von der jeweiligen Lager der Zugstange 7' und somit auch der Spannbacken 6 des Kraftspannfutters 5 ermittelten Signale werden über eine Signalleitung 75 einer Steuer- und/oder Anzeigeeinheit zugeleitet und entsprechend ausgewertet.

## Patentansprüche

1. Spanneinrichtung (1), insbesondere für Werkzeugmaschinen (2), die beispielsweise mit einem Kraftspannfutter (5) zur Halterung eines Werkstückes (10) versehen und dessen Spannbacken (6) mittels der Spanneinrichtung (1) über eine axial verstellbare Zugstange (7, 7') betätigbar sind, wobei die Spanneinrichtung (1) einen umschaltbaren elektrischen Servomotor (11) zum Auslösen von Spannbewegungen, einen Bewegungswandler (31) zur Umsetzung der Verstellbewegungen der Rotorwelle (14) des Servomotors (11) in die zur Betätigung der Spannbacken (6) erforderlichen axialen Verstellbewegungen der Zugstange (7, 7') sowie einen Kraftspeicher (41) zur Aufrechterhaltung der Spannkraft aufweist,
wobei der Servomotor (11) zum Auslösen von Spannbewegungen mittels einer gesteuert verstellbaren Schiebemuffe (51) unmittelbar oder über Zwischenglieder (38) mit dem Bewegungswandler (31) verbindbar ist, der Bewegungswandler (31) und der Kraftspeicher (41) in einem mit der Maschinenspindel (3) der Werkzeugmaschine (2) koppelbaren Gehäuse (21) eingesetzt sind, und in Spannstellung der Spanneinrichtung (1) die Schiebemuffe (51) von dem Servomotor (11) entkoppelbar ist, **dadurch gekennzeichnet, dass** in Spannstellung der Spanneimrichtung (1) das Gehäuse (21) über diese Schiebemuffe (51) mit dem Bewegungswandler (31) fest verbindbar ist.

2. Spanneinrichtung nach Anspruch 1,
**dadurch gekennzeichnet,**
**dass** das Gehäuse (21) der Spanneinrichtung (1) im Querschnitt Z-förmig ausgebildet ist und aus einer der Maschinenspindel (5) zugekehrte Hülse (22) zur Aufnahme des Bewegungswandlers (31) und des Kraftspeichers (41) und einer dem Servomotor (11) zugewandten Hohlwelle (24) zur Halterung der Schiebemuffe (51) besteht, und dass die Hülse (22) und die Hohlwelle (24) des Gehäuses (21) über eine Zwischenwand (23) fest miteinander verbunden sind.

3. Spanneinrichtung nach Anspruch 2,
**dadurch gekennzeichnet,**
**dass** das Gehäuse (21) zwischen der Hülse (22) bzw. der Hohlwelle (24) und der Zwischenwand (23) oder in deren Bereich unterteilt ausgebildet ist.

4. Spanneinrichtung nach einem der Ansprüche 1 bis 3,
**dadurch gekennzeichnet,**
**dass** in der Zwischenwand (23) des Gehäuses (21) ein oder mehrere Zwischenglieder (38) zur formschlüssigen Triebverbindung der Schiebemuffe (51) mit dem Bewegungswandler (31) drehbar gelagert sind.

5. Spanneinrichtung nach Anspruch 4,
**dadurch gekennzeichnet,**
**dass** die Zwischenglieder (38) jeweils als eine mit unterschiedlich ausgelegten Zahnrädern (39, 40) versehene Welle (38') ausgebildet sind, die einerseits unmittelbar oder über ein Zwischenrad (57) mit der Schiebemuffe (51) und andererseits mit dem Bewegungswandler (31) verbunden und als Untersetzungsgetriebe ausgelegt sind.

6. Spanneinrichtung nach Anspruch 1,
**dadurch gekennzeichnet,**
**dass** das Gehäuse (21') im Querschnitt topfförmig ausgebildet ist, in dem an einem mit der Maschinenspindel (3) verbindbaren tellerförmigen Ring (26') mit radialem Abstand zur Zugstange (7') eine axial abstehende Hülse (22') angeformt ist, in der der Bewegungswandler (31') und der Kraftspeicher (41') eingesetzt sind.

7. Spanneinrichtung nach einem der Ansprüche 1 bis 6,
**dadurch gekennzeichnet,**
**dass** die Schiebemuffe (51) über zwei jeweils auf deren seitlichen Stirnflächen angeordnete Zahnkränze (52, 53) mit einem mit dem Servomotor (11) verbundenen Antriebsrad (16) und dem Gehäuse (21') bzw. mit dessen Zwischenwand (23) über an diesen angebrachte Zahnkränze (18, 54) wechselweise formschlüssig verbindbar ist.

8. Spanneinrichtung nach Anspruch 7,
**dadurch gekennzeichnet,**
**dass** die Verzahnungen der in dem Antriebsrad (16), dem Gehäuse (21') und der Schiebemuffe (51) angebrachten Zahnkränze (18, 54, 52, 53) derart angeordnet und voneinander beabstandet sind, dass sich bei einer Verstellbewegung der Schiebemuffe (51) die ineinander greifenden Verzahnungen bis zur Einnahme der jeweiligen Endstellung der Schiebemuffe (51) überdecken.

9. Spanneinrichtung nach einem der Ansprüche 1 bis 8,
**dadurch gekennzeichnet,**
**dass** die Schiebemuffe (51) entgegen der Kraft einer oder mehrer Druckfedern (55) an einem an der Hohlwelle (24) des Gehäuses (21) angebrachten Flansch (28) abgestützt ist.

10. Spanneinrichtung nach einem der Ansprüche 1 bis 9,
**dadurch gekennzeichnet,**
**dass** die Schiebemuffe (51) mittels einer Servoeinrichtung (61), zum Beispiel in Form eines in einem Zylinder (62) eingesetzten und durch ein Druckmittel verstellbaren Verstellkolbens (63) oder eines Elektromagneten axial verstellbar ist.

11. Spanneinrichtung nach einem der Ansprüche 1 bis 10,
**dadurch gekennzeichnet,**
**dass** der mit dem Antriebsrad (16) unmittelbar oder über Zwischenglieder koppelbarer Servomotor (11, 11') fluchtend, achsparallel oder achssenkrecht zur Längsachse (A) des Gehäuses (21) der Spanneinrichtung (1) angeordnet ist.

12. Spanneinrichtung nach einem der Ansprüche 1 bis 11,
**dadurch gekennzeichnet,**
**dass** der Bewegungswandler (31) durch einen zwischen einer mit dem Servomotor (11) verbindbaren Hohlwelle (32) und der Zugstange (7') angeordneten Planetenrollen (33) gebildet ist.

13. Spanneinrichtung nach Anspruch 12,
**dadurch gekennzeichnet,**
**dass** auf der Hohlwelle (32) des Bewegungswandlers (31) der Kraftspeicher (41) angeordnet und durch diese aktivierbar ist.

14. Spanneinrichtung nach Anspruch 13,
**dadurch gekennzeichnet,**
**dass** der Kraftspeicher (41) aus einem zwischen zwei mit konstantem Abstand und gegeneinander verspannten Wälzlagern (43, 44) eingesetztes Federpaket (42) und zwei seitlich neben diesem vorgesehenen die Wälzlager (43, 44) übergreifenden Hülsen (46, 47) besteht, an deren einander zugewandten Stirnflächen (46', 47') das Federpaket (42) anliegt, und dass zur Aktivierung des Kraftspeichers (41) den Hülsen (46, 47) an dem Gehäuse (21) vorgesehene Anschläge (48, 49) zugeordnet sind, mit denen die Hülsen (46, 47) mit ihren äußeren Stirnflächen (46", 47") wechselweise zusammenwirken.

15. Spanneinrichtung nach Anspruch 14,
**dadurch gekennzeichnet,**
**dass** das Federpaket (42) aus mehreren auf zwischen den beiden Wälzlagern (43, 44) eingesetzte, vzw. an deren Außenringen abgestützte und gleichmäßig über den Umfang verteilt angeordnete Distanzbolzen (45) aufgereihte oder neben diesen angeordnete Schraubendruckfedern (42') mit vorzugsweise rechteckigem Querschnitt oder aus Tellerfedern (42") gebildet ist.

16. Spanneinrichtung nach Anspruch 14 oder 15,
**dadurch gekennzeichnet,**
**dass** durch Verspannung des Kraftspeichers (41) bei abgestützter Zugstange (7, 7') die Hohlwelle (32) des Bewegungswandlers (31) jeweils entgegen der Verstellrichtung der Zugstange (7, 7') um einen vorzugsweise in beiden Verstellrichtungen wählbaren Verstellweg (x) verstellbar ist.

17. Spanneinrichtung nach einem der Ansprüche 1 bis 16,
**dadurch gekennzeichnet,**
**dass** die Spanneinrichtung (1) mit einer Wegmesseinrichtung (71) versehen ist.

18. Spanneinrichtung nach Anspruch 17,
**dadurch gekennzeichnet,**
**dass** die Wegmesseinrichtung (71) aus einem unmittelbar an der Zugstange (7') oder über Zwischenglieder an dieser angebrachten Stellungsanzeiger (72), zum Beispiel in Form eines Abfrageringes (73), und einem ortsfest angeordneten Sensor (74) besteht, dessen Signale einer Anzeigeeinheit zuleitbar sind.

19. Spanneinrichtung nach Anspruch 18,
**dadurch gekennzeichnet,**
**dass** der Stellungsanzeiger (72) der Wegmesseinrichtung (71) das Gehäuse (21) der Spanneinrichtung (1) durchgreift und der Sensor (74) in Höhe des Stellungsanzeigers (72) an der Werkzeugmaschine (2) abgestützt ist.

20. Spanneinrichtung nach einem der Ansprüche 1 bis 19,
**dadurch gekennzeichnet,**
**dass** der Antriebsmotor (4) der Werkzeugmaschine (2) über ein Steuergerät (70) mit dem Servomotor (11) elektrisch verbunden ist.

21. Verfahren zur Steuerung des Servomotors einer Spanneinrichtung nach einem der Ansprüche 1 bis 18 in Abhängigkeit von der Drehzahl des Antriebsmotors der Werkzeugmaschine,
**dadurch gekennzeichnet,**
**dass** zur Erhöhung oder Reduzierung der Spannkraft des Kraftspannfutters (5) während eines Bearbeitungsvorganges die Drehzahl des Servomotors (11) mit Hilfe des Steuergerätes (70) derart einstellbar ist, dass zur Koppelung des Antriebsrades (16) mit der Schiebemuffe (51) der Servomotor (11) synchron mit der Drehzahl des Antriebsmotors (4) umläuft und dass zur Erhöhung oder Reduzierung der Spannkraft der Servomotor (11) gegenüber der Synchrondrehzahl mit erhöhter bzw. verminderter Drehzahl angetrieben wird.

## Claims

1. A clamping device (1), especially for machine tools (2), that is provided with a power-operated chuck (5) for holding a workpiece (10), for example, and the clamping jaws (6) of which can be actuated using the clamping device (1) by means of an axially moveable draw rod (7, 7'), in which the clamping device (1) possesses an electric servomotor (11) with a changeover function for triggering clamping movements, a movement converter (31) for converting the adjustment movements of the rotor shaft (14) of the servomotor (11) into the axial movements of the draw rod (7, 7') required for actuating the clamping jaws (6) and a force accumulator (41) for maintaining the clamping force, in which case the servomotor (11) for triggering clamping movements can be connected directly to the movement converter (31) via a controllably adjustable sliding sleeve (51) or by means of intermediate elements (38), the movement converter (31) and the force accumulator (41) are inserted in a housing (21) that can be connected to the machine spindle (3) of the machine tool (2) and, in the clamping position of the clamping device (1), the sliding sleeve (51) can be decoupled from the servomotor (11),
**characterised in that,**
in the clamping position of the clamping device (1), the housing (21) can be firmly connected to the movement converter (31) via this sliding sleeve (51).

2. The clamping device in accordance with Claim 1,
**characterised in that**
the housing (21) of the clamping device (1) is configured with a Z-shaped cross section and consists of a sleeve (22) facing towards the machine spindle (5) for holding the movement converter (31) and of the force accumulator (41) and of a hollow shaft (24) facing the servomotor (11) for holding the sliding sleeve (51), and that the sleeve (22) and the hollow shaft (24) of the housing (21) are connected together firmly by means of an intermediate wall (23).

3. The clamping device in accordance with Claim 2,
**characterised in that**
the housing (21) is configured as divided between the sleeve (22) or the hollow shaft (24) and the intermediate wall (23) or in the area of the same.

4. The clamping device in accordance with one of Claims 1 to 3,
**characterised in that**
one or more intermediate elements (38) are mounted in a rotating arrangement in the intermediate wall (23) of the housing (21) to provide the form-locking driving connection of the sliding sleeve (51) with the movement converter (31).

5. The clamping device in accordance Claim 4,
**characterised in that**
each of the intermediate elements (38) consists of a shaft (38') provided with differently designed gears (39, 40), which are connected on the one hand to the sliding sleeve (51) either directly or via an intermediate gear (57) and on the other hand with the movement converter (31), and are configured as a step-down gearbox.

6. The clamping device in accordance with Claim 1,
**characterised in that**
the cross section of the housing (21') is configured in the shape of a pot with an axially projecting sleeve (22') formed onto a plate-shaped ring (26') that can be connected to the machine spindle (3) with a radial gap from the draw rod (7'), with the movement converter (31') and the force accumulator (41') inserted into the sleeve (22').

7. The clamping device in accordance with one of Claims 1 to 6,
**characterised in that**
the sliding sleeve (51) can be connected to a drive gear (16) connected to the servomotor (11) and to the housing (21') or its intermediate wall (23) by means of two sprocket wheels (52, 53) each arranged of the lateral end surfaces via sprocket wheels (18, 54) attached to the intermediate wall (23), in an alternating form-locking arrangement.

8. The clamping device in accordance with Claim 7,
**characterised in that**
the teeth on the sprocket wheels (18, 54, 52, 53) fitted in the drive gear (16), the housing (21') and the sliding sleeve (51) are arranged and spaced apart from one another, that when there is an adjustment movement of the sliding sleeve (51), the intermeshing teeth overlap until the corresponding limit position of the sliding sleeve (51) is adopted.

9. The clamping device in accordance with one of Claims 1 to 8,
**characterised in that**
the sliding sleeve (51) is supported against the force of one or more compression springs (55) on a flange (28) attached to the hollow shaft (24) of the housing (21).

10. The clamping device in accordance with one of Claims 1 to 9,
**characterised in that**
the sliding sleeve (51) is moved axially by means of a servo device (61), for example in the form of an adjusting piston (63) inserted in a cylinder (62) and adjustable by means of a pressurised medium, or by an electromagnet.

11. The clamping device in accordance with one of Claims 1 to 10,
**characterised in that**
the servomotor (11, 11') that can be connected to the drive gear (16) directly or via intermediate elements is arranged flush, axially in parallel or axially at right angles to the lengthways axis (A) of the housing (21) of the clamping device (1).

12. The clamping device in accordance with one of Claims 1 to 11,
**characterised in that**
the movement converter (31) is formed by a planetary roller (33) arranged between a hollow shaft (32) that can be connected to the servomotor (11) and the draw rod (7').

13. The clamping device in accordance with Claim 12,
**characterised in that**
the force accumulator (41) is arranged on the hollow shaft (32) of the movement converter (31) and can be activated by the hollow shaft (32).

14. The clamping device in accordance Claim 13,
**characterised in that**
the force accumulator (41) consists of a spring pack (42) inserted between two roller bearings (43, 44) with a constant spacing and clamped against one another, and two sleeves (46, 47) provided at the side next to the spring pack (42) which extend over the roller bearings (43, 44), with the spring pack (42) making contact with the end faces (46', 47') of the sleeves (46, 47) that face towards one another, and that in order to activate the force accumulator (41), stops (48, 49) provided on the housing (21) are allocated to the sleeves (46, 47), with the outer end surfaces (46", 47") of the sleeves (46, 47) interacting alternately with the stops (48, 49).

15. The clamping device in accordance with Claim 14,
**characterised in that**
the spring pack (42) consists of several coil pressure springs (42') inserted between the two roller bearings (43, 44) or spacer pins (45) supported can the outer races and lined up in an even distribution around the circumference, or coil pressure springs (42') arranged next to the spacer pins (45), in which case the coil pressure springs (42') should preferably have a rectangular cross section or be formed from cup springs (42").

16. The clamping device in accordance with Claim 14 or 15,
**characterised in that**
by clamping the force accumulator (41) with the supported draw rod (7, 7'), the hollow shaft (32) of the movement converter (31) can be adjusted in each case opposite to the adjustment direction of the draw rod (7, 7'), through an adjustment distance (x) that, in a preferred embodiment, can be selected in both adjustment directions.

17. The clamping device in accordance with one of Claims 1 to 16,
**characterised in that**
the clamping device (1) is provided with a distance measuring device (71).

18. The clamping device in accordance with Claim 17,
**characterised in that**
the distance measuring device (71) consists of a position indicator (72) arranged directly on the draw rod (7') or attached to it by means of intermediate elements, for example in the form of a sensor ring (73), and of a sensor (74) arranged in a fixed location, the signals from which can be sent to a display unit.

19. The clamping device in accordance with Claim 18,
**characterised in that**
the position indicator (72) of the distance measuring device (71) passes through the housing (21) of the clamping device (1) and the sensor (74) is supported on the machine tool (2) at the height of the position indicator (72).

20. The clamping device in accordance with one of Claims 1 to 19,
**characterised in that**
the drive motor (4) of the machine tool (2) is electrically connected to the servomotor (11) by means of a control unit (70).

21. A process for controlling the servomotor of a clamping device in accordance with one of Claims 1 to 18 depending on the rotation speed of the drive motor of the machine tool,
**characterised in that**
the rotation speed of the servomotor (11) can be adjusted by means of the control unit (70) for increasing or reducing the clamping force of the power-operated chuck (5) during a machining process, so that the servomotor (11) rotates synchronously with the rotation speed of the drive motor (4) for coupling the drive gear (16) with the sliding sleeve (51), and that the servomotor (11) is driven with increased or reduced speed in relation to the synchronous speed in order to increase or reduce the clamping force.

## Revendications

1. Dispositif de serrage (1) en particulier pour machines-outils (2), équipé p. ex. d'un mandrin de serrage motorisé (5) pour le serrage d'une pièce à usiner (10), dont les mors de serrage (6) se laissent actionner à l'aide du dispositif de serrage (1) par l'intermédiaire d'une tige de traction axialement réglable (7, 7'), le dispositif de serrage (1) comprenant un servomoteur électrique commutable (11) pour le déclenchement des mouvements de serrage, un convertisseur de mouvement (31) pour la conversion des mouvements de réglage de l'arbre de rotor (14) du servomoteur (11) en mouvements de réglage axiaux de la tige de traction (7, 7') nécessaires à l'actionnement des mors de serrage (6), ainsi qu'un accumulateur de force (41) pour le maintien de la force de serrage, le servomoteur (11) se laissant raccorder au convertisseur de mouvement (31) soit directement par un manchon coulissant déplaçable et commandé (51), soit par l'intermédiaire d'éléments intermédiaires (38), où le convertisseur de mouvement (31) et l'accumulateur de force (41) sont montés dans un boîtier (21) se laissant accoupler à la broche (3) de la machine-outil (2), et où, en position serrée du dispositif de serrage (1), le manchon coulissant (51) se laisse découpler du servomoteur (11),
**caractérisé en ce que**
en position serrée du dispositif de serrage (1), le boîtier (21) se laisse raccorder rigidement au convertisseur de mouvement (31) par l'intermédiaire de ce manchon coulissant (51).

2. Dispositif de serrage d'après la revendication 1,
**caractérisé en ce que**
la section transversale du boîtier (21) du dispositif de serrage (1) ait la forme d'un Z et consiste d'une douille (22) donnant sur le broche (5) recevant le convertisseur de mouvement (31) et l'accumulateur de force (41), et d'un arbre creux (24) donnant sur le servomoteur (11) et appuyant le manchon coulissant (51), et que la douille (22) et l'arbre creux (24) du boîtier (21) sont raccordés rigidement entr'eux par une paroi intermédiaire (23).

3. Dispositif de serrage d'après la revendication 2,
**caractérisé en ce que**
le boîtier (21) est subdivisé entre la douille (22) ou l'arbre creux (24) et la paroi intermédiaire (23), ou à son endroit.

4. Dispositif de serrage d'après une des revendications 1 à 3,
**caractérisé en ce que**
dans la paroi intermédiaire (23) du boîtier (21), il est logé en rotation un ou plusieurs éléments intermédiaires (38) assurant l'entraînement par engagement du manchon coulissant (51) et du convertisseur de mouvement (31).

5. Dispositif de serrage d'après la revendication 4,
**caractérisé en ce que**
les éléments intermédiaires (38) sont conçus respectivement sous la forme d'un arbre (38') muni de roues dentées de formes différentes (39, 40), qui sont raccordées d'une part directement ou par l'intermédiaire d'une roue dentée (57) avec le manchon coulissant (51) et d'autre part avec le convertisseur de mouvement (31), et servent d'engrenage démultiplicateur.

6. Dispositif de serrage d'après la revendication 1,
**caractérisé en ce que**
la section transversale du boîtier (21') est conçue sous la forme d'un pot, dans lequel il est formé, sur un anneau sous forme d'un plateau (26') se laissant raccorder à la broche (3), à une certaine distance de la tige de traction (7'), une douille (22') saillant axialement et recevant le convertisseur de mouvement (31) et l'accumulateur de force (41).

7. Dispositif de serrage d'après une des revendications 1 à 6,
**caractérisé en ce que**
par l'intermédiaire de respectivement deux couronnes dentées (52, 53) disposées sur ses faces latérales, le manchon coulissant (51) se laisse raccorder alternativement par engagement avec une roue dentée (16) raccordée au servomoteur (11) et avec le boîtier (21'), ou avec sa paroi intermédiaire (23), par l'intermédiaire de couronnes dentées (18, 54) prévues sur ceux-ci.

8. Dispositif de serrage d'après la revendication 7,
**caractérisé en ce que**
les dentures des couronnes dentées (18, 54, 52, 53) prévues dans la roue dentée (16), le boîtier (21') et le manchon coulissant (51) sont disposées et espacées entr'elles de sorte qu'au mouvement de réglage du manchon coulissant (51), les dentures s'engrenant l'une dans l'autre se chevauchent jusqu'à ce que le manchon coulissant (51) ait gagné sa position finale.

9. Dispositif de serrage d'après une des revendications 1 à 8,
**caractérisé en ce que**
le manchon coulissant (51) s'appuie contre la force d'un ou de plusieurs ressorts de pression (55) contr'une bride (28) montée dans l'arbre creux (24) du boîtier (21).

10. Dispositif de serrage d'après une des revendications 1 à 9,
**caractérisé en ce que**
le manchon coulissant (51) se laisse déplacer axialement à l'aide d'un servo-équipement (61), p. ex. sous la forme d'un piston de réglage (63) inséré dans un cylindre (62) et réglable par un milieu de pression, ou par un électro-aimant.

11. Dispositif de serrage d'après une des revendications 1 à 10,
**caractérisé en ce que**
le servomoteur (11, 11') qui se laisse accoupler directement ou moyennant des éléments intermédiaires avec la roue d'entraînement (16), est disposé en alignement précis, parallèle à l'axe ou perpendiculairement à l'axe longitudinal (A) du boîtier (21) du dispositif de serrage (1).

12. Dispositif de serrage d'après une des revendications 1 à 11,
**caractérisé en ce que**
le convertisseur de mouvement (31) est formé par des rouleaux planétaires (33) disposés entre l'arbre creux (32) raccordable au servomoteur (11) et la tige de traction (7').

13. Dispositif de serrage d'après la revendication 12,
**caractérisé en ce que**
l'accumulateur de force (41) est disposé sur l'arbre creux (32) du convertisseur de mouvement (31) et actionné par celui-ci.

14. Dispositif de serrage d'après la revendication 13,
**caractérisé en ce que**
l'accumulateur de force (41) est réalisé par un paquet de ressorts (42) monté entre deux roulements à rouleaux (43, 44) serrés à une distance constante l'un par rapport à l'autre et par deux douilles latérales (46, 47) chevauchant les roulements à rouleaux (43, 44), sur les faces frontales intérieures (46', 47') desquelles porte le paquet de ressorts (42), et que pour l'activation de l'accumulateur de force (41), il est assigné aux douilles (46, 47) des butées (48, 49) prévus sur le boîtier (21), avec lesquelles collaborent les douilles (46, 47) moyennant leurs faces frontales extérieures (46", 47").

15. Dispositif de serrage d'après la revendication 14,
**caractérisé en ce que**
le paquet de ressorts (42) consiste de plusieurs ressorts de pression hélicoïdaux (42') à section transversale de préférence rectangulaire ou de ressorts à disque (42"), disposés sur des boulons d'écartement (45) ou arrangés à côté de ceux-ci, boulons montés entre les deux roulements à rouleaux (43, 44) ou appuyés sur leurs anneaux extérieurs et distribués uniformément sur le pourtour.

16. Dispositif de serrage d'après les revendications 14 au 15,
**caractérisé en ce que**
par le serrage de l'accumulateur de force (41) à l'appui de la tige de traction (7, 7'), l'arbre creux (32) du convertisseur de mouvement (31) est réglable, contre la direction de réglage de la tige de traction (7, 7'), sur une course de réglage (x) sélectionnable de préférence dans deux directions.

17. Dispositif de serrage d'après une des revendications 1 à 16,
**caractérisé en ce que**
le dispositif de serrage (1) est équipé d'un équipement de mesure de la course (71).

18. Dispositif de serrage d'après la revendication 17,
**caractérisé en ce que**
l'équipement de mesure de la course (71) consiste d'un indicateur de position (72) p. ex. sous la forme d'un anneau de relèvement (73) ou d'un capteur fixe (74), qui est prévu directement ou moyennant des éléments intermédiaires sur la tige de traction (7'), et dont les signaux sont transmis à une unité d'affichage.

19. Dispositif de serrage d'après la revendication 18,
**caractérisé en ce que**
l'indicateur de position (72) de l'équipement de mesure de la course (71) passe à travers le boîtier (21) du dispositif de serrage (1) et que le capteur (74) s'appuie au niveau de l'indicateur de position (72) sur la machine-outil (2).

20. Dispositif de serrage d'après une des revendications 1 à 19,
**caractérisé en ce que**
le moteur d'entraînement (4) de la machine-outil (2) est lié électriquement par l'intermédiaire d'une unité de commande (70) avec le servomoteur (1).

21. Procédé de commande d'un servomoteur d'un dispositif de serrage d'après une des revendications 1 à 18 en dépendance de la vitesse de rotation du moteur d'entraînement de la machine-outil,
**caractérisé en ce que**
pour augmenter ou pour diminuer la force de serrage du mandrin de serrage (5) pendant l'usinage, la vitesse du servomoteur (11) se laisse régler à l'aide de l'unité de commande (70) de sorte que pour l'accouplement de la roue d'entraînement (16) au manchon coulissant (51), le servomoteur tourne de manière synchrone avec la vitesse de rotation du moteur d'entraînement (4), et que pour augmenter ou pour réduire la force de serrage, le servomoteur (11) est entraîné à vitesse augmentée ou diminuée par rapport à la vitesse synchrone.
